# FASCICULE DE BREVET EUROPEEN

(11) **EP 0 819 400 B1**
(45) Date de publication et mention de la délivrance du brevet: **09.10.2002**
(21) Numéro de dépôt: 97401683.4
(22) Date de dépôt: 11.07.1997
(51) Int. Cl.: A47J 37/12

(54) **Appareil électrique de cuisson**
Elektrisches Kochgerät
Electric cooking apparatus

(30) Priorité: 15.07.1996 FR 9608824
(43) Date de publication de la demande: 21.01.1998
(73) Titulaire: MOULINEX S.A., 75008 Paris (FR)
(72) Inventeur: Baillieul, Philippe Louis Robert, 14280 Saint Germain La Blanche Herbe (FR); Bois, Bernard Marcel, 14000 Caen (FR); Collas, Guy, 14123 Ifs (FR)
(74) Mandataire: Busquets, Jean-Pierre

(56) Documents cités:
- WO-A-96/04832
- FR-A- 2 682 827
- US-A- 3 908 111

## Description

La présente invention se rapporte à un appareil électrique de cuisson, par exemple une friteuse ménagère, du type comportant, dans un boîtier, une cuve susceptible de contenir un bain de cuisson, et une résistance électrique chauffante placée sous la cuve pour le chauffage du bain de cuisson.

Pour prévenir les accidents dûs à un fonctionnement à vide de la cuve, ou avec une faible quantité de bain de cuisson, il est connu de prévoir, en série avec la résistance électrique chauffante, un dispositif de sécurité thermique placé contre une face externe de la cuve. Ce dispositif de sécurité thermique est destiné à couper l'alimentation de la résistance électrique dès lors qu'il mesure une surchauffe de la cuve.

Dans certaines réalisations connues, le dispositif de sécurité thermique est placé contre le fond de la cuve, par exemple en son centre. Un premier inconvénient réside dans le fait que ce positionnement interdit l'utilisation d'une résistance en serpentin ou enroulée sous forme d'une spire, ou encore d'un bloc chauffant.

En outre, le dispositif de sécurité thermique est fortement influencé par le rayonnement de la résistance chauffante.

Dans d'autres réalisations connues, telles que celles décrites dans les documents FR-A-2 682 827 et EP-A-0 815 786 (Art. 54(3) CBE), le dispositif de sécurité thermique, en l'occurrence un fusible thermique, est placé contre la face externe de la paroi latérale de la cuve, la cuve comportant à cet effet un moyen pour créer un chemin thermique de longueur optimisée entre sa paroi de fond et le dispositif de sécurité thermique. Dans cette position, le dispositif de sécurité thermique peut faire une mesure de température de la partie inférieure de la cuve en étant peu influencé par le rayonnement de la résistance.

Cependant, lors d'un fonctionnement à vide ou avec une très faible quantité de bain de cuisson, les études menées par la Demanderesse ont montré que l'emplacement précédent ne permettait pas au dispositif de sécurité de réagir suffisamment rapidement pour éviter une inflammation de l'huile et, dans le cas d'une cuve à revêtement auto-nettoyant, la destruction du revêtement du fond de la cuve.

La présente invention a pour but de proposer un appareil électrique de cuisson ne présentant pas les inconvénients précédents.

Plus précisément, l'invention a pour objet un appareil électrique de cuisson du type comportant, dans un boîtier, une cuve délimitée par une paroi de fond et une paroi périphérique latérale et susceptible de contenir un bain de cuisson, une résistance électrique chauffante placée sous ladite paroi de fond, et un dispositif de sécurité thermique en contact avec la cuve à un niveau supérieur à la paroi de fond, ladite cuve comportant un moyen pour créer un chemin thermique de longueur optimisée entre la paroi de fond et le dispositif de sécurité thermique, caractérisé en ce que le moyen permettant de créer le chemin thermique de longueur optimisée comporte un méplat situé dans une zone inférieure de la paroi périphérique latérale, adjacente à la paroi de fond, contre lequel le dispositif de sécurité thermique est placé.

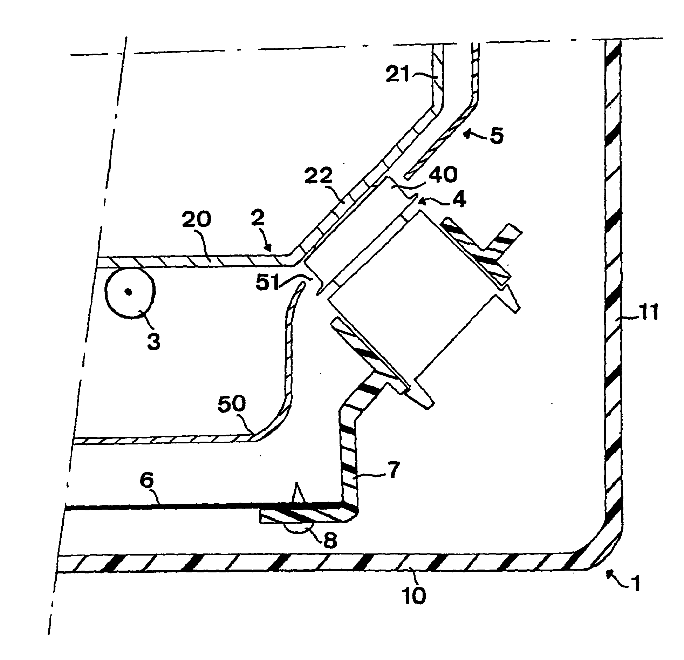

L'invention sera mieux comprise au vu de la description ci-après faite en référence à la figure unique annexée montrant une vue partielle et schématique, en coupe verticale, d'un exemple de réalisation d'un appareil électrique de cuisson selon l'invention.

L'appareil électrique de cuisson tel que représenté en partie sur la figure comporte un boîtier 1 dont on ne voit partiellement que le fond 10 et la face arrière 11. Ce boîtier est de préférence moulé en une matière plastique telle que, par exemple, du polypropylène.

A l'intérieur du boîtier 1 est placée une cuve métallique 2 susceptible de contenir un bain de cuisson, tel que de l'huile ou de la graisse provenant de la fusion d'un bloc de graisse. La cuve 2 est délimitée par une paroi de fond 20 et une paroi périphérique latérale dont on ne voit sur la figure que la partie arrière 21.

Le chauffage du bain de cuisson est réalisé par l'intermédiaire d'une résistance électrique chauffante 3 placée sous la cuve 2.

En outre, l'appareil électrique de cuisson comporte un dispositif de sécurité thermique 4 qui doit détecter toute surchauffe de la cuve, et couper le cas échéant l'alimentation (non représentée) de la résistance chauffante 3. Le dispositif de sécurité comporte par exemple un fusible thermique et/ou un thermostat de sécurité, monté(s) en série dans le circuit d'alimentation de la résistance 3. Afin de ne pas être influencé par le rayonnement calorifique de la résistance électrique 3, le dispositif de sécurité 4 est placé en contact avec la cuve à un niveau supérieur à la paroi de fond 20.

Dans l'exemple représenté, le moyen permettant de créer, selon l'invention, un chemin thermique de longueur optimisée entre la paroi de fond 20 et le dispositif de sécurité thermique 4 comporte un méplat 22 situé dans une zone inférieure de la paroi périphérique latérale 21, adjacente à la paroi de fond 20 et contre lequel le dispositif de sécurité thermique 4 est placé.

Cette disposition permet d'optimiser le chemin thermique, et donc le temps de réaction du dispositif de sécurité, par rapport aux dispositions connues dans lesquelles le dispositif est placé contre la face externe de la paroi périphérique latérale 21, tout en satisfaisant aux contraintes d'encombrement.

Dans le mode de réalisation préférentiel représenté, la cuve 2 est placée dans le boîtier 1 en sorte que le méplat 22 soit positionné du côté de la face arrière 11 du boîtier.

La cuve est par exemple de forme sensiblement parallélépipédique, et le méplat s'étend alors de préférence sur une zone de la partie arrière 21 de la cuve 2.

D'autres formes de cuve peuvent cependant être envisagées.

La cuve 2 est de préférence montée amovible à l'intérieur d'une enceinte délimitée par une double paroi 5 métallique dont la base 50 sert avantageusement de réflecteur au rayonnement calorifique de la résistance électrique chauffante 3.

Un écran thermique 6 est de préférence interposé entre la base 50 de la double paroi 5 et le fond 10 du boîtier 1. Le dispositif de sécurité thermique 4 est avantageusement monté sur l'écran thermique 6 par l'intermédiaire d'un support 7 fixé, par exemple au moyen de vis 8, sur l'écran thermique 6. Le support 7 est de préférence réalisé en matière plastique. Une ouverture 51 est pratiquée dans la double paroi de manière à permettre le passage d'un organe sensible 40 du dispositif de sécurité thermique. Lorsque la cuve 2 est correctement placée à l'intérieur de l'appareil électrique de cuisson, le méplat 22 vient en contact avec l'organe sensible 40.

Il convient de noter que d'autres variantes peuvent être réalisées sans sortir du cadre de la présente invention comme défini dans les revendications.

## Revendications

1. Appareil électrique de cuisson du type comportant, dans un boîtier (1), une cuve (2) délimitée par une paroi de fond (20) et une paroi périphérique latérale (21) et susceptible de contenir un bain de cuisson, une résistance électrique chauffante (3) placée sous ladite paroi de fond, et un dispositif de sécurité thermique (4) en contact avec la cuve à un niveau supérieur à la paroi de fond, ladite cuve comportant un moyen (22) pour créer un chemin thermique de longueur optimisée entre la paroi de fond (20) et le dispositif de sécurité thermique (4),
**caractérisé en ce que** le moyen permettant de créer le chemin thermique de longueur optimisée comporte un méplat (22) situé dans une zone inférieure de la paroi périphérique latérale (21), adjacente à la paroi de fond (20), contre lequel le dispositif de sécurité thermique (4) est placé.

2. Appareil électrique de cuisson selon la revendication 1,
**caractérisé en ce que** ledit boîtier (1) comportant une face arrière (11), la cuve (2) est disposée à l'intérieur du boîtier de façon à ce que le méplat (22) soit du côté de ladite face arrière.

3. Appareil électrique de cuisson selon la revendication 2,
**caractérisé en ce** la cuve (2) est de forme sensiblement parallélépipédique, la paroi périphérique latérale de la cuve présentant une partie arrière (21) disposée du côté de la face arrière (11) du boîtier, et en ce que le méplat (22) s'étend sur une zone de ladite partie arrière.

4. Appareil électrique de cuisson selon l'une quelconque des revendications 1 à 3,
**caractérisé en ce qu'**il comporte une double paroi (5) métallique formant une enceinte à l'intérieur de laquelle la cuve (2) est montée amovible.

5. Appareil électrique de cuisson selon la revendication 4,
**caractérisé en ce que** ladite enceinte est délimitée dans sa partie inférieure par une base (50), et **en ce que** l'appareil électrique de cuisson comporte en outre un écran thermique (6) interposé entre ladite base et le boîtier (1).

6. Appareil électrique de cuisson selon la revendication 5,
**caractérisé en ce que** le dispositif de sécurité thermique (4) est fixé sur ledit écran thermique (6), et **en ce que** la double paroi (5) comporte une ouverture (51) de manière à permettre le passage d'un organe sensible (40) du dispositif de sécurité thermique.

7. Appareil électrique de cuisson selon la revendication 6,
**caractérisé en ce que** le dispositif de sécurité thermique (4) est fixé sur ledit écran thermique (6) par l'intermédiaire d'un support (7) en matière plastique.

8. Appareil électrique de cuisson selon l'une quelconque des revendications précédentes,
**caractérisé en ce que** le dispositif de sécurité thermique (4) comporte un thermostat de sécurité et/ou un fusible de sécurité.

## Claims

1. Electrical cooking appliance of the type having, in a casing (1), a vessel (2) delimited by a bottom wall (20) and a peripheral side wall (21) and able to contain a cooking bath, an electric heating element (3) placed under the said bottom wall, and a thermal safety device (4) in contact with the vessel at a level higher than the bottom wall, the said vessel having a means (22) for creating a thermal path of optimised length between the bottom wall (20) and the thermal safety device (4), **characterised in that** the means for creating the thermal path of optimised length comprises a flat (22) situated in a bottom area of the peripheral side wall (21), adjacent to the bottom wall (20), against which the thermal safety device (4) is placed.

2. Electric cooking appliance according to Claim 1, **characterised in that**, the said casing (1) having a rear face (11), the vessel (2) is disposed inside the casing so that the flat (22) is on the same side as the said rear face.

3. Electric cooking appliance according to Claim 2, **characterised in that** the vessel (2) is substantially parallelepipedal in shape, the peripheral side wall of the vessel having a rear part (21) disposed on the same side as the rear face (11) of the casing, and **in that** the flat (22) extends over an area of the said rear part.

4. Electric cooking appliance according to any one of Claims 1 to 3, **characterised in that** it has a metallic double wall (5) forming an enclosure inside which the vessel (2) is removably mounted.

5. Electric cooking appliance according to Claim 4, **characterised in that** the said enclosure is delimited in its bottom part by a base (50), and **in that** the electric cooking appliance also has a heat screen (6) interposed between the said base and the casing (1).

6. Electric cooking appliance according to Claim 5, **characterised in that** the thermal safety device (4) is fixed to the said heat screen (6), and **in that** the double wall (5) has an opening (51) so as to allow the passage of a sensitive member (40) of the thermal safety device.

7. Electric cooking appliance according to Claim 6, **characterised in that** the thermal safety device (4) is fixed to the said heat screen (6) by means of a support (7) made from plastics material.

8. Electric cooking appliance according to any one of the preceding claims, **characterised in that** the thermal safety device (4) has a safety thermostat and/or safety fuse.

## Patentansprüche

1. Elektrisches Kochgerät von dem Typ, der in einem Gehäuse (1) ein Gefäß (2) aufweist, das durch eine Bodenwand (20) und eine seitliche Umfangswand (21) begrenzt ist und ein Kochbad enthalten kann, einen elektrischen Heizwiderstand (3), der unter der Bodenwand angeordnet ist, und eine thermische Sicherheitsvorrichtung (4) aufweist, welche das Gefäß auf einer Höhe über der Bodenwand berührt, wobei das Gefäß eine Vorrichtung (22) aufweist, um eine Wärmeleitstrecke von optimierter Länge zwischen der Bodenwand (20) und der thermischen Sicherheitsvorrichtung (4) zu bilden, **dadurch gekennzeichnet, daß** die Vorrichtung, welche ermöglicht die Wärmeleitstrecke von optimierter Länge zu bilden, eine Abflachung (22) aufweist, die in einem unteren Bereich der seitlichen Umfangswand (21) neben der Bodenwand (20) liegt und der gegenüber die thermische Sicherheitsvorrichtung (4) angeordnet ist.

2. Elektrisches Kochgerät nach Anspruch 1, **dadurch gekennzeichnet, daß** das Gehäuse (1) eine Rückseite (11) aufweist und das Gefäß (2) im Inneren des Gehäuses so angeordnet ist, daß die Abflachung (22) sich auf der Seite der Rückseite befindet.

3. Elektrisches Kochgerät nach Anspruch 2, **dadurch gekennzeichnet, daß** das Gefäß (2) von im wesentlichen Quaderform ist, die seitliche Umfangswand des Gefäßes einen auf der Rückseite (11) des Gehäuses angeordneten hinteren Teil (21) aufweist und daß die Abflachung (22) sich über einen Bereich dieses hinteren Teils erstreckt.

4. Elektrisches Kochgerät nach einem der Ansprüche 1 bis 3, **dadurch gekennzeichnet, daß** es eine Doppelwand (5) aus Metall aufweist, die einen Raum bildet, in dessen Inneren das Gefäß (2) abnehmbar montiert ist.

5. Elektrisches Kochgerät nach Anspruch 4, **dadurch gekennzeichnet, daß** der Raum in seinem unteren Teil durch eine Basis (50) begrenzt ist und daß das elektrische Kochgerät außerdem einen zwischen der Basis und dem Gehäuse (1) angeordneten Wärmeschild (6) aufweist.

6. Elektrisches Kochgerät nach Anspruch 5, **dadurch gekennzeichnet, daß** die thermische Sicherheitsvorrichtung (4) an dem Wärmeschild (6) befestigt ist und daß die Doppelwand (5) eine Öffnung (51) in solcher Weise aufweist, daß sie den Durchtritt eines Fühlerelements (40) der thermischen Sicherheitsvorrichtung ermöglicht.

7. Elektrisches Kochgerät nach Anspruch 6, **dadurch gekennzeichnet, daß** die thermische Sicherheitsvorrichtung (4) an dem Wärmeschild (6) mittels eines Halters (7) aus Kunststoff befestigt ist.

8. Elektrische Kochvorrichtung nach einem der vorangehenden Ansprüche, **dadurch gekennzeichnet, daß** die thermische Sicherheitsvorrichtung (4) einen Sicherheitsthermostat und/oder eine Schmelzsicherung aufweist.
